# EUROPÄISCHE PATENTSCHRIFT

(11) **EP 3 710 296 B1**
(45) Veröffentlichungstag und Bekanntmachung des Hinweises auf die Patenterteilung: **08.12.2021**
(21) Anmeldenummer: 18789625.3
(22) Anmeldetag: 18.10.2018
(51) Int. Cl.: B60K 1/00, B60K 6/20, F16H 3/44

(54) **ANTRIEBSVORRICHTUNG BEINHALTEND EINE FAHRZEUGACHSE FÜR EIN ZWEISPURIGES FAHRZEUG**
DRIVE DEVICE COMPRISING A VEHICLE AXLE FOR A TWO-TRACK VEHICLE
DISPOSITIF D'ENTRAÎNEMENT COMPRENANT UN ESSIEU DE VÉHICULE POUR UN VÉHICULE À DEUX VOIES

(30) Priorität: 13.11.2017 DE 102017220167
(43) Veröffentlichungstag der Anmeldung: 23.09.2020
(73) Patentinhaber: Audi AG, 85045 Ingolstadt (DE)
(72) Erfinder: PINSCHMIDT, Udo, 85080 Gaimersheim (DE); HUMMEL, Steffen, 71287 Flacht (DE); WIRTH, Christian, 85452 Moosinning / Eichenried (DE)
(86) Internationale Anmeldenummer: PCT/EP2018/078614
(87) Internationale Veröffentlichungsnummer: WO 2019/091746

(56) Entgegenhaltungen:
- DE-A1-102010 036 239
- DE-A1-102013 202 381
- DE-A1-102014 210 549
- DE-A1-102015 104 778

## Beschreibung

Die Erfindung betrifft eine Antriebsvorrichtung beinhaltend eine Fahrzeugachse, insbesondere Hinterachse, für ein zweispuriges Fahrzeug, nach dem Oberbegriff des Patentanspruches 1. Aus der DE 10 2014 015 793 A1 ist eine Antriebsvorrichtung für eine Fahrzeug-Hinterachse bekannt, die ein Achsdifferenzial aufweist, das eingangsseitig mit einer Primär-Antriebsmaschine (zum Beispiel Brennkraftmaschine) verbindbar ist und ausgangsseitig mit beidseitig angeordneten Flanschwellen mit Fahrzeugrädern der Fahrzeugachse verbindbar ist. Der Fahrzeugachse ist eine zusätzliche Antriebsmaschine (insbesondere Elektromaschine) sowie ein schaltbares Überlagerungsgetriebe zugeordnet. Das Überlagerungsgetriebe kann in eine Momentenverteilungs-Gangstufe schaltbar sein, in der ein von der zusätzlichen Antriebsmaschine erzeugtes Antriebsmoment erzeugt wird, in Abhängigkeit von dessen Größe und Drehrichtung eine Momentenverteilung auf die beiden Fahrzeugräder änderbar ist. Alternativ dazu ist das Überlagerungsgetriebe in einen Hybrid-Modus schaltbar, in dem das von der zusätzlichen Antriebsmaschine generierte Antriebsmoment in einer schaltbaren Hybrid-Gangstufe über das Achsdifferenzial gleichmäßig verteilt auf beide Flanschwellen der Fahrzeugräder einkoppelbar ist. Bei bestimmten Fahrsituationen, zum Beispiel bei einer Kurvenfahrt, kann durch eingelegter Momentenverteilungs-Gangstufe das Fahrverhalten durch eine Drehmoment-Umverteilung (Torque-Vectoring oder Quersperrenfunktion) unterstützt werden. So kann bei einer Kurvenfahrt am Kurveneingang ein Antriebsmoment zum kurvenäußeren Fahrzeugrad verlagert werden (Torque-Vectoring). Alternativ/zusätzlich kann bei der Kurvenfahrt am Kurvenausgang das Antriebsmoment zum kurveninneren Fahrzeugrad verlagert werden (Quersperrenfunktion). Demgegenüber kann bei aktiviertem Hybrid-Modus zum Beispiel eine Boost-Funktion erfolgen.

In der obigen DE 10 2014 015 793 A1 weist das Überlagerungsgetriebe insgesamt drei Planetengetriebe auf, die über zwei Bremsen schaltbar sind, um den Hybrid-Modus oder den Momentenverteilungs-Modus bereitzustellen, wodurch sich insgesamt eine bauraumintensive Anordnung ergibt.

In der DE 10 2014 210549 A1 wird eine gattungsgemäße Antriebsvorrichtung offenbart.

Die Aufgabe der Erfindung besteht darin, eine Antriebsvorrichtung für eine Fahrzeugachse eines zweispurigen Fahrzeugs bereitzustellen, die im Vergleich zum Stand der Technik bauraumreduzierter aufgebaut ist, und bei der mit einfachen Mitteln eine Funktionserweiterung/-reduzierung ermöglicht ist, und zwar bei geringerem Bauraumbedarf sowie bei gesteigerter Fahrdynamik.

Die Aufgabe ist durch die Merkmale des Anspruchs 1 gelöst. Bevorzugte Weiterbildungen der Erfindung sind in den Unteransprüchen offenbart.

Gemäß dem kennzeichnenden Teil des Patentanspruches 1 sind die
genau drei Planetengetriebe im Überlagerungsgetriebe so miteinander gekoppelt, dass bei einer geschalteten ersten Hybrid-Gangstufe H1, insbesondere ein Anfahrgang, ein Lastpfad gebildet ist, in dem eine Leistungsverzweigung erfolgt und alle drei Planetengetriebe eingebunden sind. Sowohl bei einer geschalteten zweiten Hybrid-Gangstufe H2 als auch bei geschalteter Momentenverteilungs-Gangstufe TV ist ein Lastpfad gebildet, in dem jeweils dieselben zwei Planetengetriebe PG1, PG2 eingebunden sind. Auf diese Weise können in der ersten Hybrid-Gangstufe und in der zweiten Hybrid-Gangstufe in einfacher Weise unterschiedliche Übersetzungen realisiert werden.

Von den drei Planetengetrieben ist ein Eingangs-Planetengetriebe eingangsseitig mit der zusätzlichen Antriebsmaschine trieblich verbunden. Ein Ausgangs-Planetengetriebe ist ausgangsseitig mit dem Achsdifferenzial trieblich verbunden, während in Axialrichtung dazwischen ein Zwischen-Planetengetriebe geschaltet ist. Die drei Planetengetriebe können bevorzugt in Fahrzeugquerrichtung hintereinander koaxial zur Flanschwelle angeordnet sein.

In einer konkreten Ausführungsform kann das Eingangs-Planetengetriebe mit seinem (als Eingangselement wirkenden) Sonnenrad drehfest auf einer von der zusätzlichen Antriebsmaschine angetriebenen Getriebeeingangswelle sitzen. Demgegenüber kann das Ausgangs-Planetengetriebe als Ausgangselement einen, Planetenräder tragenden Planetenradträger aufweisen. Dieser kann über einen Hybrid-Abtriebsflansch drehfest auf einer Getriebeausgangswelle des Übertragungsgetriebes angeordnet sein. Die Getriebeausgangswelle ist mit der Achsdifferenzial-Eingangsseite trieblich verbunden.

Das (als Eingangselement wirkende) Sonnenrad des Eingangs-Planetengetriebes kämmt mit Planetenrädern, die an einem Planetenradträger drehgelagert sind und in Zahneingriff mit einem Hohlrad sind. Dabei kann das Hohlrad des Eingangs-Planetengetriebes sowie ein Hohlrad des Zwischen-Planetengetriebes drehfest auf einer radial äußeren Hohlradwelle angeordnet sein. Das Hohlrad des Zwischen-Planetengetriebes kämmt mit Planetenrädern, die an einem Planetenradträger drehgelagert sind und in Zahneingriff mit einem gehäusefest ausgebildeten Sonnenrad sind.

Der Planetenradträger des Eingangs-Planetengetriebes kann zudem über ein Hybrid-Schaltelement SH2 am Getriebegehäuse festbremsbar oder davon lösbar sein. Demgegenüber kann der Planetenradträger des Zwischen-Planetengetriebes drehfest am Planetenradträger des Ausgangs-Planetengetriebes bzw. an der Getriebeausgangswelle angebunden sein. Die Planetenradträger des Zwischen-Planetengetriebes und des Ausgangs-Planetengetriebes können bevorzugt über eine Verbindungswelle miteinander trieblich verbunden sein.

Bei der obigen Getriebestruktur kann mit eingelegter zweiter Hybrid-Gangstufe somit der Planetenradträger des Eingangs-Planetengetriebes mittels des Hybrid-Schaltelementes gehäusefest geschaltet sein. In diesem Fall ergibt sich ein Lastpfad von der zusätzlichen Antriebsmaschine über das Eingangs-Planetengetriebe in das Zwischen-Planetengetriebe. Von dort wird der Lastpfad weiter über die Getriebeausgangswelle bis zur Eingangsseite des Achsdifferenzials geführt, und zwar ohne Leistungsverzweigung sowie bei frei drehendem Ausgangs-Planetengetriebe, das heißt ohne dessen Einbindung in den Lastpfad.

Das Achsdifferenzial kann in beliebiger Bauweise realisiert sein, beispielhaft als ein Ravigneaux-Satz, bei dem Planetenräder eines ersten Planetenradsatzes sowohl mit einem radial äußeren Hohlrad, das die Eingangsseite des Achsdifferenzials bildet, als auch mit Planetenrädern eines zweiten Planetenradsatzes kämmen. Zudem sind die Planetenräder des ersten Planetenradsatzes mit einem ersten, großen Sonnenrad in Zahneingriff, während die Planetenräder des zweiten Planetenradsatzes mit einem zweiten, kleinen Sonnenrad in Zahneingriff sind. Die beiden Planetenradsätze sind in gängiger Praxis an einem gemeinsamen Planetenradträger drehgelagert. Bevorzugt kann das erste, große Sonnenrad auf einer Momentenverteilungs-Abtriebswelle drehfest angeordnet sein, während das zweite, kleine Sonnenrad drehfest auf der einen (getriebefernen) Flanschwelle angeordnet ist und der gemeinsame Planetenradträger drehfest auf der anderen (getriebeseitigen) Flanschwelle angeordnet ist.

Die oben erwähnte Momentenverteilungs-Welle kann einen Momentenverteilungs-Abtriebsflansch drehfest tragen, der über ein Momentenverteilungs-Schaltelement STV trieblich mit dem Planetenradträger des Eingangs-Planetengetriebes koppelbar oder davon lösbar ist.

Bei eingelegter Momentenverteilungs-Gangstufe TV sind somit die Momentenverteilungs-Welle und der Planetenradträger des Eingangs-Planetengetriebes mittels des Momentenverteilungs-Schaltelementes STV trieblich miteinander verbunden. Dadurch ergibt sich ein Lastpfad von der zusätzlichen Antriebsmaschine in das Eingangs-Planetengetriebe, an dessen Planetenradträger eine Leistungsverteilung erfolgt, bei der ein erster Teilpfad über das Hohlrad des Eingangs-Planetengetriebes und über die Hohlradwelle zum Zwischen-Planetengetriebe führt. Von dort führt der erste Teilpfad über den Planetenradträger weiter zur Getriebeausgangswelle. Das Ausgangs-Planetengetriebe ist im Unterschied zum Eingangs- und Zwischen-Planetengetriebe nicht in den ersten Teilpfad eingebunden, sondern dreht vielmehr frei mit. Zudem führt ein zweiter Teilpfad über den Planetenradträger des Eingangs-Planetengetriebes sowie über das geschlossene Momentenverteilungs-Schaltelement STV zur Momentenverteilungs-Welle bis zum ersten, großen Sonnenrad des Achsdifferenzials. Dadurch erfolgt in Abhängigkeit vom Betrag sowie der Drehrichtung des von der zusätzlichen Antriebsmaschine generierten Antriebsmomentes eine Momentenverteilung zwischen den Fahrzeugrädern.

Das Ausgangs-Planetengetriebe kann ein Sonnenrad aufweisen, das mit Planetenrädern kämmt und über ein Hybrid-Schaltelement SH1 mit dem Planetenradträger des Eingangs-Planetengetriebes koppelbar oder davon lösbar ist. Zudem kann das Ausgangs-Planetengetriebe ein mit den Planetenrädern kämmendes, gehäusefestes Hohlrad aufweisen.

Bei eingelegter erster Hybrid-Gangstufe H1 ist das Sonnenrad des Ausgangs-Planetengetriebes mit dem Planetenradträger des Eingangs-Planetengetriebes trieblich gekoppelt. Dadurch bildet sich ein Lastpfad von der zusätzlichen Antriebsmaschine in das Eingangs-Planetengetriebe, an dessen Planetenradträger eine Leistungsverzweigung in einen ersten Teilpfad und in einem zweiten Teilpfad erfolgt. Der erste Teilpfad führt über die Planetenräder und das Hohlrad des Eingangs-Planetengetriebes auf die Hohlradwelle und weiter in das Zwischen-Planetengetriebe. Von dort führt der erste Teilpfad über die Verbindungswelle zum Planetenradträger des Ausgangs-Planetengetriebes bis zur Getriebeausgangswelle. Der zweite Teilpfad führt vom Planetenradträger des Eingangs-Planetengetriebes über das geschlossene Hybrid-Schaltelement SH1 zum Sonnenrad des Ausgangs-Planetengetriebes. An dessen Planetenradträger erfolgt eine Leistungsaddition, bei der der erste und zweite Teilpfad aufsummiert werden und der Summen-Lastpfad zur Achsdifferenzial-Eingangsseite weitergeführt wird.

Im Hinblick auf eine Packageoptimierung ist es bevorzugt, wenn der Planetenradträger des Eingangs-Planetengetriebes an einer Schaltwelle angebunden ist, die radial innen einen Bauraum begrenzt, in dem das Eingangs- und das Zwischen-Planetengetriebe bauraumgünstig angeordnet ist. Die Schaltwelle weist an ihrem, axial vom Eingangs-Planetenradträger beabstandeten Wellenende das erste Hybrid-Schaltelement SH1, das zweite Hybrid-Schaltelement SH2 und das Momentenverteilungs-Schaltelement STV auf. In diesem Fall können sämtliche Schaltelemente SH1, SH2, STV zu einer Schaltgruppe zusammengefasst sein, die in Axialrichtung seitlich der Planetengetriebe positioniert sind. Die Schaltwelle kann zudem einen Festbrems-Flansch drehfest tragen, der über das zweite Hybrid-Schaltelement SH2 am Getriebegehäuse festbremsbar oder davon lösbar ist.

Im Hinblick auf eine weitere Packageoptimierung kann das Ausgangs-Planetengetriebe in der Fahrzeugquerrichtung fahrzeuginnen sowie unmittelbar neben dem Achsdifferenzial angeordnet sein. Das Zwischen-Planetengetriebe kann fahrzeugaußen angeordnet sein, während die Schaltelemente SH1, SH2, STV bevorzugt auf der fahrzeugäußeren Seite des Zwischen-Planetengetriebes positioniert sind. In diesem Fall kann das Sonnenrad des Ausgangs-Planetengetriebes auf einer Sonnenrad-Welle drehfest angeordnet sein, dessen, vom Sonnenrad entferntes Wellenende über das erste Hybrid-Schaltelement SH1 mit der oben definierten Schaltwelle koppelbar ist.

Nachfolgend sind Ausführungsbeispiel der Erfindung anhand der beigefügten Figuren beschrieben.

Es zeigen:
- Figur 1: in einer schematischen Darstellung eine Antriebsvorrichtung für eine Fahrzeug-Hinterachse eines zweispurigen Fahrzeugs;
- Figuren 2, 3 und 4: jeweils Ansichten entsprechend der Figur 1 mit hervorgehobenem Antriebsmomentenfluss bei geschalteter erster Hybrid-Gangstufe (Figur 2), bei geschalteter zweiter Hybrid-Gangstufe (Figur 3) und bei geschalteter Momentenverteilungs-Gangstufe (Figur 4).

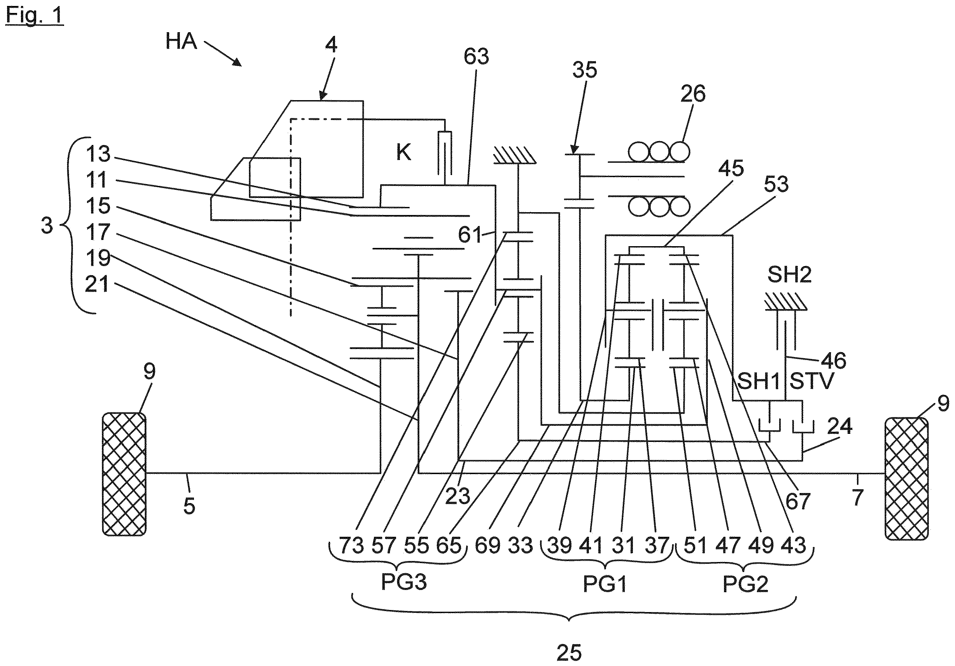

In der Figur 1 ist grob schematisch eine Getriebestruktur einer Antriebsvorrichtung für eine Fahrzeug-Hinterachse HA eines zweispurigen Fahrzeugs gezeigt. Die in der Figur 1 angedeutete Antriebsvorrichtung kann Bestandteil eines Allradantriebes sein, bei dem eine nicht dargestellte frontseitige Brennkraftmaschine als Primär-Antriebsmaschine über ein Getriebe sowie ein Mittendifferenzial und ein Vorderachsdifferenzial auf die Vorderräder des Fahrzeugs abtreibt. Das Mittendifferenzial kann über eine Kardanwelle sowie über einen Kegeltrieb 4 trieblich mit der Eingangsseite 13 eines Hinterachsdifferenzials 3 verbunden sein. Zwischen dem Kegeltrieb 4 und der Eingangsseite 13 des Hinterachsdifferenzials 3 ist eine Kupplung K geschaltet, mittels der die Hinterachse HA trieblich von der Kardanwelle abkoppelbar ist.

Das Hinterachsdifferenzial 3 ist ausgangsseitig über beidseitig angeordnete Flanschwellen 5, 7 mit den Fahrzeughinterrädern 9 der Fahrzeug-Hinterachse HA trieblich gekoppelt. In der Figur 1 ist das Hinterachsdifferenzial 3 ein Planetendifferenzial mit einem Ravigneaux-Radsatz, bei dem Planetenräder 11 eines ersten Planetenradsatzes sowohl mit einem radial äußeren Hohlrad 13, das die Eingangsseite des Achsdifferenzials 3 bildet, als auch mit Planetenrädern 15 eines zweiten Planetenradsatzes kämmen. Zudem sind die Planetenräder 11 des ersten Planetenradsatzes in Zahneingriff mit einem ersten, großen Sonnenrad 17. Die Planetenräder 15 des zweiten Planetenradsatzes sind dagegen in Zahneingriff mit einem zweiten, kleinen Sonnenrad 19. Beide Planetenradsätze sind an einem gemeinsamen Planetenradträger 21 drehgelagert, der drehfest auf einer getriebefernen Flanschwelle 5 sitzt. Demgegenüber sitzt das zweite, kleine Sonnenrad 19 drehfest auf der getriebeseitigen Flanschwelle 7, während das erste, große Sonnenrad 17 drehfest auf einer Momentenverteilungs-Abtriebswelle 23 sitzt, die in das Überlagerungsgetriebe 25 führt.

Die Hinterachse HA weist ein bereits erwähntes Überlagerungsgetriebe 25 sowie eine Elektromaschine 26 auf. Das Überlagerungsgetriebe 25 ist in einem Hybrid-Modus oder in einem Momentenverteilungs-Modus (das heißt elektronisches Torque-Vectoring oder Quersperrenfunktion) betreibbar, wie es später beschrieben wird. Im Hybrid-Modus wird ein von der Elektromaschine 26 generiertes Antriebsmoment über das Überlagerungsgetriebe 25 sowie über das Hinterachsdifferenzial 3 gleichmäßig verteilt auf die beiden Flanschwellen 5, 7 eingekoppelt. Der Hybrid-Modus ist rein elektromotorisch durchführbar oder in Kombination der Elektromaschine 26 mit der Brennkraftmaschine (zum Beispiel für eine Boost-Funktion).

Im Momentenverteilungs-Modus wird das von der Elektromaschine 26 generierte Antriebsmomente nicht nur zur Eingangsseite (Hohlrad 13) des Achsdifferenzials 3 geleitet, sondern auch über das Überlagerungsgetriebe 25 zum ersten großen Sonnenrad 17 des Achsdifferenzials 3, um eine Momentenverteilung auf die beiden Hinterräder 9 zu ändern. Die Einleitung in das erste, große Sonnenrad 17 erfolgt über einen auf der Momentenverteilungs-Abtriebswelle 23 sitzenden Momentenverteilungs-Flansch 24 des Überlagerungsgetriebes 25. In Abhängigkeit vom Betrag sowie der Drehrichtung des von der Elektromaschine 26 generierten Antriebsmomentes erfolgt die Momentenverteilung zwischen den Fahrzeugrädern 9.

Nachfolgend wird die Getriebestruktur des Überlagerungsgetriebes 25 anhand der Figur 1 erläutert: Demzufolge weist das Überlagerungsgetriebe 25 ein mit der Elektromaschine 26 trieblich verbundenes Eingangs-Planetengetriebe PG1, ein mit dem Achsdifferenzial 3 trieblich verbundenes Ausgangs-Planetengetriebe PG3 und ein dazwischen geschaltetes Zwischen-Planetengetriebe PG2 auf. Die drei Planetengetriebe PG1, PG2, PG3 sind in Reihe hintereinander koaxial zur Flanschwelle 7 angeordnet. Das Ausgangs-Planetengetriebe PG3 ist dabei in der Fahrzeugquerrichtung y fahrzeuginnen sowie unmittelbar neben dem Achsdifferenzial 3 positioniert, während das Zwischen-Planetengetriebe PG2 fahrzeugaußen angeordnet ist. Die später beschriebenen Schaltelemente SH1, SH2, STV sind auf der fahrzeugäußeren Seite des Zwischen-Planetengetriebes PG2 positioniert sowie als eine Schaltgruppe zusammengefasst.

Das Eingangs-Planetengetriebe PG1 weist als ein Eingangselement ein Sonnenrad 31 auf, das mit einer von der Elektromaschine 26 angetriebenen Getriebeeingangswelle 33 drehfest verbunden ist.

Im Hinblick auf eine Drehmomentwandlung ist in der Figur 1 die Elektromaschine 26 über eine Vorgelegestufe 35 (das heißt Stirnradstufe) mit der Getriebeeingangswelle 33 gekoppelt. Die Elektromaschine 26 ist somit im Hinblick auf eine Packageoptimierung achsparallel zur Flanschwelle 7 angeordnet.

Das Sonnenrad 31 des Eingangs-Planetengetriebes PG1 kämmt mit Planetenrädern 37, die an einem Planetenradträger 39 drehgelagert sind. Zudem sind die Planetenräder 37 in Zahneingriff mit einem Hohlrad 41. Das Hohlrad 41 ist zusammen mit einem Hohlrad 43 des Zwischen-Planetengetriebes PG2 drehfest auf einer Hohlradwelle 45 angeordnet. Das Hohlrad 43 des Zwischen-Planetengetriebes PG2 kämmt mit Planetenrädern 47, die an einem Planetenradträger 49 drehgelagert sind und in Zahneingriff mit einem Sonnenrad 51 sind, das gehäusefest ausgebildet ist.

Der Planetenradträger 39 des Eingangs-Planetengetriebes PG1 ist an eine radial äußere Schaltwelle 53 angebunden, die radial innen einen Bauraum begrenzt, in dem sowohl das Eingangs- als auch das Zwischen-Planetengetriebe PG1, PG2 angeordnet sind. An einem vom Eingangs-Planetenradträger 49 axial beabstandeten Wellenende der Schaltwelle 53 ist ein erstes Hybrid-Schaltelement SH1, ein zweites Hybrid-Schaltelement SH2 und ein Momentenverteilungs-Schaltelement STV positioniert.

Das ausgangsseitige Planetengetriebe PG3 weist als ein Ausgangselement einen, Planetenräder 55 tragenden Planetenradträger 57 auf, der über einen Hybrid-Abtriebsflansch 59 drehfest auf einer Getriebeausgangswelle 61 angeordnet ist. Diese ist mit der Eingangsseite 13 des Achsdifferenzials 3 trieblich verbunden. Das Ausgangs-Planetengetriebe PG3 weist zudem ein mit dessen Planetenrädern 55 kämmendes Sonnenrad 65 auf, das auf einer Sonnenrad-Welle 67 drehfest angeordnet ist. Deren vom Sonnenrad 65 entferntes Wellenende ist über das erste Hybrid-Schaltelement SH1 mit der Schaltwelle 53 koppelbar. Das Ausgangs-Planetengetriebe PG3 weist außerdem ein mit den Planetenrädern 55 kämmendes Hohlrad 73 auf, das gehäusefest ausgebildet ist.

Zudem ist der Planetenradträger 49 des Zwischen-Planetengetriebes PG2 über eine Verbindungswelle 69 mit dem Planetenradträger 57 des Ausgangs-Planetengetriebes PG3 drehfest verbunden. Der Planetenradträger 57 des Ausgangs-Planetengetriebes PG3 weist zudem einen Hybrid-Abtriebsflansch 61 auf, der drehfest auf der Getriebeausgangswelle 63 sitzt.

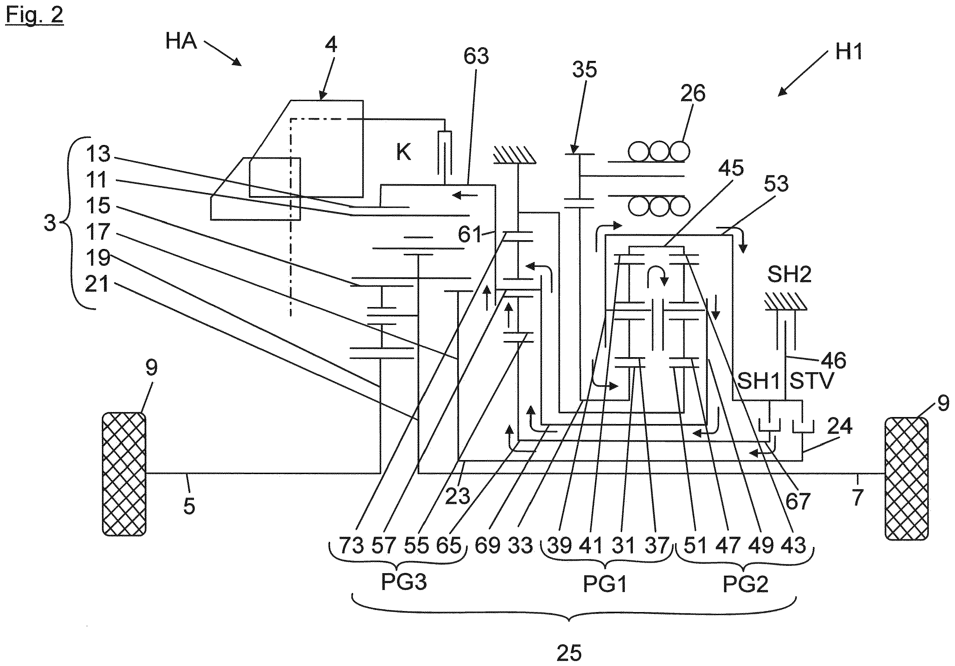

Um die Funktionsweise der Antriebsvorrichtung zu erläutern, wird anhand der Figur 2 eine Fahrsituation beschrieben, bei der die erste Hybrid-Gangstufe H1 geschaltet ist. Vorliegend ist die erste Hybrid-Gangstufe H1 exemplarisch als ein Anfahrgang ausgelegt, der bei niedrigen Fahrgeschwindigkeiten einlegbar ist. Bei eingelegter erster Hybrid-Gangstufe H1 ist der Planetenradträger 39 des Eingangs-Planetengetriebes PG1 über das erste Hybrid-Schaltelement SH1 trieblich mit dem Sonnenrad 65 des Ausgangs-Planetengetriebes PG3 gekoppelt. Dadurch bildet sich ein Lastpfad von der Elektromaschine 26 in das Eingangs-Planetengetriebe PG1, an dessen Planetenradträger 39 eine Leistungsverzweigung in einen ersten Teilpfad und in einen zweiten Teilpfad erfolgt. Der erste Teilpfad führt über die Planetenräder 37 und das Hohlrad 41 des Eingangs-Planetengetriebes PG1 auf die Hohlradwelle 45 und weiter in das Zwischen-Planetengetriebe PG2. Von dort führt der erste Teilpfad über die Verbindungswelle 69 zum Planetenradträger 57 des Ausgangs-Planetengetriebes PG3 bis zur Getriebeausgangswelle 63. Der zweite Teilpfad führt vom Planetenradträger 39 des Eingangs-Planetengetriebes PG1 über das geschlossene Hybrid-Schaltelement SH1 zum Sonnenrad 65 des Ausgangs-Planetengetriebes PG3. Am Planetenradträger 57 des Ausgangs-Planetengetriebes PG3 erfolgt eine Leistungsaddition, bei der erste und zweite Teilpfad aufsummiert werden.

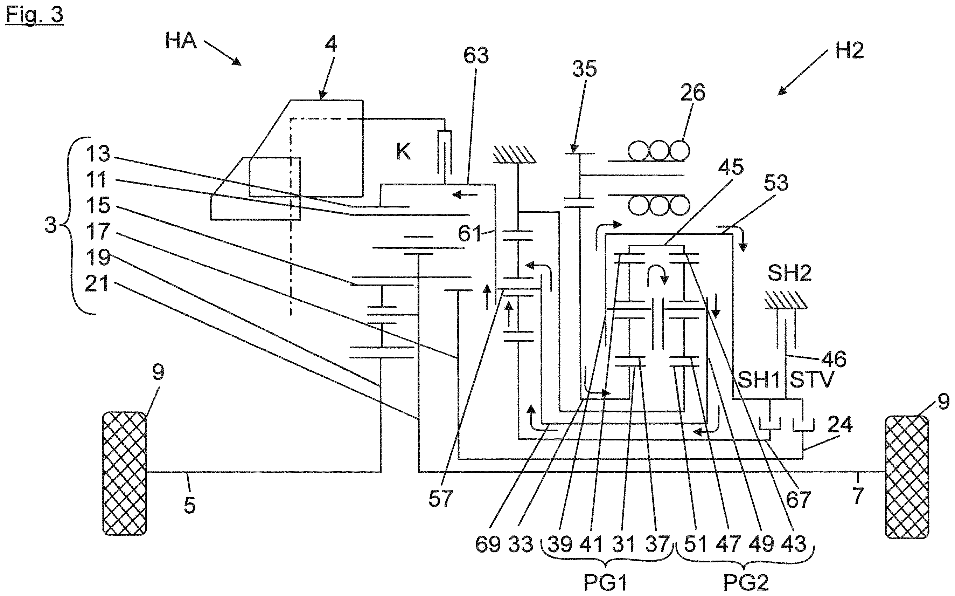

In der Figur 3 ist eine weitere Fahrsituation gezeigt, bei der im Unterschied zur Figur 2 das Überlagerungsgetriebe 25 bei eingelegter zweiter Hybrid-Gangstufe H2 betrieben ist. In diesem Fall ist der Planetenradträger 39 des Eingangs-Planetengetriebes PG1 mittels des zweiten Hybrid-Schaltelementes SH2 gehäusefest geschaltet. Dadurch bildet sich ein Lastpfad von der Elektromaschine 26 über das Eingangs-Planetengetriebe PG1 in das Zwischen-Planetengetriebe PG2 und weiter über die Getriebeausgangswelle 63 bis zur Eingangsseite 13 des Achsdifferenzials 3.

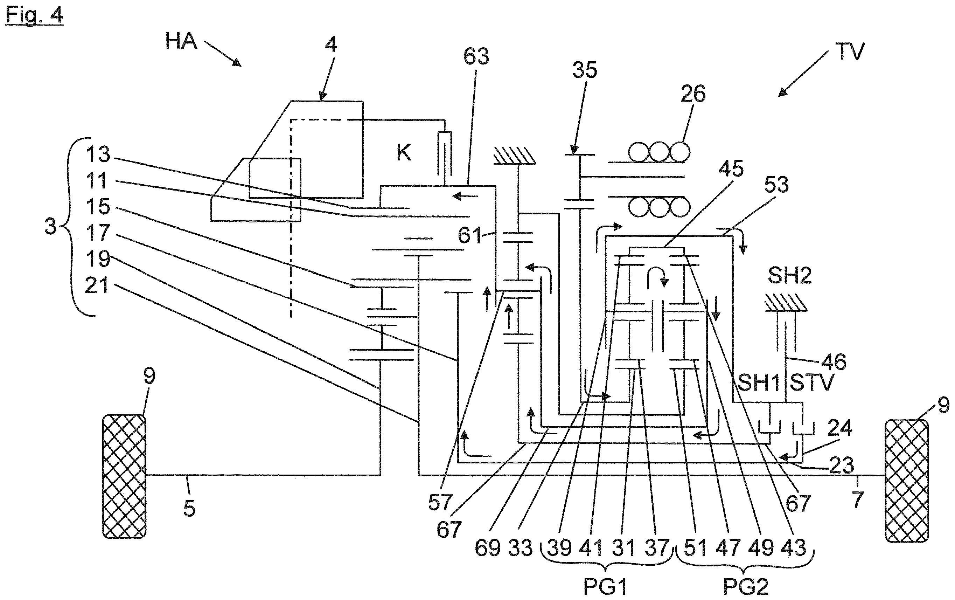

In der Figur 4 wird das Überlagerungsgetriebe 25 nicht in einem Hybrid-Modus betrieben, sondern vielmehr in einem Momentenverteilungs-Modus. Dieser Modus ist etwa bei einer Kurvenfahrt aktiviert, um zwischen den Flanschwellen 5, 7 eine Momentendifferenz zu erzielen. Im Momentenverteilungs-Modus ist die Momentenverteilungs-Gangstufe TV eingelegt, so dass die Momentenverteilungs-Welle 23 mittels des Momentenverteilungs-Schaltelementes STV trieblich mit dem Planetenradträger 39 des Eingangs-Planetengetriebes PG1 verbunden ist. Dadurch bildet sich ein Lastpfad von der Elektromaschine 26 in das Eingangs-Planetengetriebe PG1, an dessen Planetenradträger 39 eine Leistungsverteilung in einen ersten Teilpfad und in einen zweiten Teilpfad erfolgt. Der erste Teilpfad führt über das Hohlrad 41 des Eingangs-Planetengetriebes PG1 sowie über die Hohlradwelle 45 zum Zwischen-Planetengetriebe PG2. Von dort führt der erste Teilpfad über den Planetenradträger 49 des Zwischen-Planetengetriebes PG2 weiter zur Getriebeausgangswelle 63. In diesem Fall ist sowohl das Eingangs- als auch das Zwischen-Planetengetriebe PG1, PG2 in den Lastpfad eingekoppelt, während das Ausgangs-Planetengetriebe PG3 frei mitdreht und nicht in den Lastpfad eingekoppelt ist. Der zweite Teilpfad führt über den Planetenradträger 39 des Eingangs-Planetengetriebes PG1 sowie über das geschlossene Momentenverteilungs-Schaltelement STV zur Momentenverteilungs-Welle 23.

## Patentansprüche

1. Antriebsvorrichtung beinhaltend eine Fahrzeugachse, insbesondere Hinterachse (HA), für ein zweispuriges Fahrzeug, wobei die Fahrzeugachse (HA) ein Achsdifferenzial (3) aufweist, das eingangsseitig mit einer Primär-Antriebsmaschine verbindbar ist und ausgangsseitig über beidseitig angeordnete Flanschwellen (5, 7) mit Fahrzeugrädern (9) der Fahrzeugachse (HA) verbindbar ist, wobei der Fahrzeugachse (HA) eine zusätzliche Antriebsmaschine (26) und ein schaltbares Überlagerungsgetriebe (25) zugeordnet ist, das in eine Momentenverteilungs-Gangstufe (TV) schaltbar ist, in der ein von der zusätzlichen Antriebsmaschine (26) erzeugtes Antriebsmoment erzeugt wird, in Abhängigkeit von dessen Größe und Drehrichtung eine Momentenverteilung auf die beiden Fahrzeugräder (9) änderbar ist, und in einem Hybrid-Modus schaltbar ist, in dem das von der zusätzlichen Antriebsmaschine (26) generierte Antriebsmoment über das Achsdifferenzial (3) gleichmäßig verteilt auf beide Flanschwellen (5, 7) der Fahrzeugräder (9) einkoppelbar ist, wobei das Überlagerungsgetriebe (25) genau drei miteinander gekoppelte Planetengetriebe (PG1, PG2, PG3) aufweist, **dadurch gekennzeichnet, dass** bei einer geschalteten ersten Hybrid-Gangstufe (H1), insbesondere ein Anfahrgang, ein Lastpfad gebildet ist, in dem eine Leistungsverzweigung erfolgt und alle drei Planetengetriebe (PG1, PG2, PG3) eingebunden sind, und dass sowohl bei einer geschalteten zweiten Hybrid-Gangstufe (H2) als auch bei geschalteter Momentenverteilungs-Gangstufe (TV) ein Lastpfad gebildet ist, in dem dieselben zwei Planetengetriebe (PG1, PG2) eingebunden sind.

2. Antriebsvorrichtung nach Anspruch 1, **dadurch gekennzeichnet, dass** die drei Planetengetriebe (PG1, PG2, PG3) ein mit der zusätzlichen Antriebsmaschine (26) trieblich verbundenes Eingangs-Planetengetriebe (PG1), ein mit dem Achsdifferenzial (3) trieblich verbundenes Ausgangs-Planetengetriebe (PG3) und ein dazwischen geschaltetes Zwischen-Planetengetriebe (PG2) aufweist, und dass insbesondere die drei Planetengetriebe (PG1, PG2, PG3) in Reihe hintereinander koaxial zur Flanschwelle (5, 7) angeordnet sind, und dass das Eingangs-Planetengetriebe (PG1) mit seinem Eingangselement, das heißt Sonnenrad (31), mit einer von der zusätzlichen Antriebsmaschine (26) angetriebenen Getriebeeingangswelle (33) drehfest verbunden ist, und/oder dass das Ausgangs-Planetengetriebe (PG3) mit seinem Ausgangselement, das heißt ein Planetenräder (55) tragender Planetenradträger (57) über einen Hybrid-Abtriebsflansch (61) drehfest auf einer Getriebeausgangswelle (63) angeordnet ist, die mit der Eingangsseite (13) des Achsdifferenzials (3) trieblich verbunden ist, und/oder dass das Ausgangs-Planetengetriebe (PG3) ein mit den Planetenrädern (55) kämmendes, gehäusefestes Hohlrad (73) aufweist.

3. Antriebsvorrichtung nach Anspruch 2, **dadurch gekennzeichnet, dass** das Sonnenrad (31) des eingangsseitigen Planetengetriebes (PG1) mit Planetenräder (37) kämmt, die an einem Planetenradträger (39) drehgelagert sind und in Zahneingriff mit einem Hohlrad (41) sind, und dass das Hohlrad (41) des Eingangs-Planetengetriebe (PG1) und ein Hohlrad (43) des Zwischen-Planetengetriebes (PG2) drehfest auf einer Hohlradwelle (45) angeordnet sind, und dass das Hohlrad (43) des Zwischen-Planetengetriebes (PG2) mit Planetenrädern (47) kämmt, die an einem Planetenradträger (49) drehgelagert sind und in Zahneingriff mit einem Sonnenrad (51) sind, das gehäusefest ausgebildet ist.

4. Antriebsvorrichtung nach Anspruch 3, **dadurch gekennzeichnet, dass** der Planetenradträger (39) des Eingangs-Planetengetriebes (PG1) über ein Hybrid-Schaltelement (SH2) am Getriebegehäuse festbremsbar oder davon lösbar ist, und dass der Planetenradträger (49) des Zwischen-Planetengetriebes (PG2) drehfest am Planetenradträger (57) des Ausgangs-Planetengetriebes (PG3) bzw. an der Getriebeausgangswelle (63) angebunden ist, so dass in der zweiten Hybrid-Gangstufe (H2) der Planetenradträger (39) des Eingangs-Planetengetriebes (PG1) über das Hybrid-Schaltelement (SH2) gehäusefest geschaltet ist, so dass sich ein Lastpfad von der zusätzlichen Antriebsmaschine (26) über das Eingangs-Planetengetriebe (PG1) in das Zwischen-Planetengetriebe (PG2) und weiter über die Getriebeausgangswelle (63) bis zur Eingangsseite (13) des Achsdifferenzials (3) ergibt.

5. Antriebsvorrichtung nach Anspruch 4, **dadurch gekennzeichnet, dass** der Planetenradträger (49) des Zwischen-Planetengetriebes (PG2) und der Planetenradträger (57) des Ausgangs-Planetengetriebes (PG3) über eine Verbindungswelle (69) miteinander trieblich verbunden sind.

6. Antriebsvorrichtung nach einem der vorhergehenden Ansprüche, **dadurch gekennzeichnet, dass** das Achsdifferenzial (3) einen Ravigneaux-Satz aufweist, bei dem Planetenräder (11) eines ersten Planetenradsatzes sowohl mit einem radial äußeren Hohlrad (13), das die Eingangsseite des Achsdifferenzials (3) bildet, jeweils mit Planetenrädern (15) eines zweiten Planetenradsatzes als auch mit einem ersten, großen Sonnenrad (17) kämmen, und dass die Planetenräder (15) des zweiten Planetenradsatzes mit einem zweiten, kleinen Sonnenrad (19) kämmen, wobei die beiden Planetenradsätze an einem gemeinsamen Planetenradträger (21) drehgelagert sind, und dass insbesondere das erste, große Sonnenrad (17) auf einer Momentenverteilungs-Abtriebswelle (23) drehfest angeordnet ist, das zweite, kleine Sonnenrad (19) drehfest auf der einen Flanschwelle (5) angeordnet ist und der gemeinsame Planetenradträger (21) drehfest auf der anderen Flanschwelle (7) angeordnet ist.

7. Antriebsvorrichtung nach den Ansprüchen 3 bis 6, **dadurch gekennzeichnet, dass** die Momentenverteilungs-Welle (23) einen Momentenverteilungs-Abtriebsflansch (24) drehfest trägt, der über ein Momentenverteilungs-Schaltelement (STV) trieblich mit dem Planetenradträger (39) des Eingangs-Planetengetriebes (PG1) koppelbar oder davon lösbar ist.

8. Antriebsvorrichtung nach Anspruch 7, **dadurch gekennzeichnet, dass** bei eingelegter Momentenverteilungs-Gangstufe (TV) die Momentenverteilungs-Welle (23) und der Planetenradträger (39) des Eingangs-Planetengetriebes (PG1) über das Momentenverteilungs-Schaltelement (STV) trieblich verbunden sind, so dass sich ein Lastpfad von der zusätzlichen Antriebsmaschine (26) in das Eingangs-Planetengetriebe (PG1) bildet, an dessen Planetenradträger (39) eine Leistungsverteilung erfolgt, bei der ein erster Teilpfad über das Hohlrad (41) des Eingangs-Planetengetriebes (PG1) und über die Hohlradwelle (45) zum Zwischen-Planetengetriebe (PG2) führt, und von dort über dessen Planetenradträger (49) weiter zur Getriebeausgangswelle (63) führt, wobei das Ausgangs-Planetengetriebe (PG3) frei mitdreht und nicht in den Lastpfad eingebunden ist, und ein zweiter Teilpfad über den Planetenradträger (39) des Eingangs-Planetengetriebes (PG1) und das geschlossene Momentenverteilungs-Schaltelement (STV) zur Momentenverteilungs-Welle (23) führt.

9. Antriebsvorrichtung nach den Ansprüche 3 bis 8, **dadurch gekennzeichnet, dass** das Ausgangs-Planetengetriebe (PG3) ein mit dessen Planetenrädern (55) kämmendes Sonnenrad (65) aufweist, das über ein Hybrid-Schaltelement (SH1) mit dem Planetenradträger (39) des Eingangs-Planetengetriebes (PG1) koppelbar oder davon lösbar ist, und dass insbesondere bei eingelegter erster Hybrid-Gangstufe (H1) der Planetenradträger (39) des Eingangs-Planetengetriebes (PG1) über das Hybrid-Schaltelement (SH1) trieblich mit dem Sonnenrad (65) des Ausgangs-Planetengetriebes (PG3) gekoppelt ist, so dass sich ein Lastpfad von der zusätzlichen Antriebsmaschine (26) in das Eingangs-Planetengetriebe (PG1) bildet, an dessen Planetenradträger (39) eine Leistungsverzweigung erfolgt, bei der ein erster Teilpfad über die Planetenräder (37) und das Hohlrad (41) des Eingangs-Planetengetriebes (PG1) auf die Hohlradwelle (45) und weiter in das Zwischen-Planetengetriebe (PG2) führt, von wo der erste Teilpfad über die Verbindungswelle (69) zum Planetenradträger (57) des Ausgangs-Planetengetriebes (PG3) bis zur Getriebeausgangswelle (63) führt, und ein zweiter Teilpfad vom Planetenradträger (39) des Eingangs-Planetengetriebes (PG1) über das geschlossene Hybrid-Schaltelement (SH1) zum Sonnenrad (65) des Ausgangs-Planetengetriebes (PG3) führt, und am Planetenradträger (57) des Ausgangs-Planetengetriebes (PG3) eine Leistungsaddition erfolgt, bei der der erste und zweite Teilpfad aufsummiert werden.

10. Antriebsvorrichtung nach den Ansprüchen 3 bis 9, **dadurch gekennzeichnet, dass** der Planetenradträger (39) des Eingangs-Planetengetriebes (PG1) an einer Schaltwelle (53) angebunden ist, die radial innen einen Bauraum begrenzt, in dem das Eingangs- und das Zwischen-Planetengetriebe (PG1, PG2) angeordnet ist, und dass insbesondere an einem vom Eingangs-Planetenradträger (39) axial beabstandeten Wellenende der Schaltwelle (53) das erste Hybrid-schaltelement (SH1), das zweite Hybridschaltelement (SH2) und das Momentenverteilungs-Schaltelement (STV) positioniert sind.

11. Antriebsvorrichtung nach Anspruch 10, **dadurch gekennzeichnet, dass** das Sonnenrad (65) des Ausgangs-Planetengetriebes (PG3) auf einer Sonnenrad-Welle (67) angeordnet ist, und dass ein vom Sonnenrad (65) entferntes Wellenende der Sonnenrad-Welle (67) über das erste Hybrid-Schaltelement (SH1) mit der Schaltwelle (53) koppelbar ist.

12. Antriebsvorrichtung nach einem der Ansprüche 10 oder 11, **dadurch gekennzeichnet, dass** das Ausgangs-Planetengetriebe (PG3) in der Fahrzeugquerrichtung (y) fahrzeuginnen unmittelbar neben dem Achsdifferenzial (3) angeordnet ist, und das Zwischen-Planetengetriebe (PG) fahrzeugaußen angeordnet ist und dass die Schaltelemente (SH1, SH2, STV) auf der fahrzeugäußeren Seite des Zwischen-Planetengetriebes (PG2) angeordnet sind.

## Claims

1. Drive device including a vehicle axle, in particular rear axle (HA), of a two-track vehicle, wherein the vehicle axle (HA) has an axle differential (3), which can be connected to a primary drive machine on the input side and to vehicle wheels (9) of the vehicle axle (HA) on the output side via flanged shafts (5, 7) arranged on both sides, wherein the vehicle axle (HA) is paired with an additional drive machine (26) and a shiftable superimposing transmission (25), which can be shifted into a torque distribution gear stage (TV), in which a drive torque generated by the additional drive machine (26) is generated, wherein a torque distribution to the two vehicle wheels (9) can be changed depending on its magnitude and rotational direction, and can be shifted into a hybrid mode, in which the drive torque generated by the additional drive machine (26) can be coupled into the two flanged shafts (5, 7) of the vehicle wheels (9) in a uniformly distributed manner via the axle differential (3), wherein the superimposing transmission (25) has exactly three planetary transmissions (PG1, PG2, PG3), which are coupled together, **characterised in that,** when a first hybrid gear stage (H1), in particular a starting gear, is engaged, a load path is formed, in which a power distribution takes place and all three planetary transmissions (PG1, PG2, PG3) are incorporated, and that both when a second hybrid gear stage (H2) is engaged or a torque distribution gear stage (TV) is engaged, a load path is formed, in which the same two planetary transmissions (PG1, PG2) are incorporated.

2. Drive device according to claim 1, **characterised in that** the three planetary transmissions (PG1, PG2, PG3) have an input planetary transmission (PG1) operatively connected to the additional drive machine (26), an output planetary transmission (PG3) operatively connected to the axle differential (3) and an intermediate planetary transmission (PG2) connected in between them, and that, in particular, the three planetary transmissions (PG1, PG2, PG3) are arranged in series one after the other coaxially to the flanged shafts (5, 7), and that the input planetary transmission (PG1), with its input element, i.e. sun gear (31), is non-rotatably connected to a transmission input shaft (33) driven by the additional drive maschine (26), and/or that the output planetary transmission (PG3), with its output element, i.e. a planetary gear carrier (57) bearing planetary gears (55), is non-rotatably arranged on a transmission output shaft (63) via a hybrid output flange (61), which is operatively connected to the input side (13) of the axle differential (3), and/or that the output planetary transmission (PG3) has a ring gear (73) fixed to the housing and meshing with the planetary gears (55).

3. Drive device according to claim 2, **characterised in that** the sun gear (31) of the input side planetary transmission (PG1) meshes with planetary gears (37), which are rotatably mounted on a planetary gear carrier (39) and are in meshing engagement with a ring gear (41), and that the ring gear (41) of the input planetary transmission (PG1) and a ring gear (43) of the intermediate planetary transmission (PG2) are non-rotatably arranged on a ring gear shaft (45), and that the ring gear (43) of the intermediate planetary transmission (PG2) meshes with planetary gears (47), which are rotatably mounted on a planetary gear carrier (49) and in meshing engagement with a sun gear (51), which is designed fixed to the housing.

4. Drive device according to claim 3, **characterised in that** the planetary gear carrier (39) of the input planetary transmission (PG1) can be fixedly braked on the transmission housing or can be disengaged from it via a hybrid shift element (SH2), and that the planetary gear carrier (49) of the intermediate planetary transmission (PG2) is non-rotatably attached to the planetary gear carrier (57) of the output planetary transmission (PG3) and/or to the transmission output shaft (63), such that, in the second hybrid gear stage (H2), the planetary gear carrier (39) of the input planetary transmission (PG1) is fixedly shifted via the hybrid shift element (SH2), such that a load path is produced from the additional drive machine (26) via the input planetary transmission (PG1) into the intermediate planetary transmission (PG2) and further via the transmission output shaft (63) as far as the input side (13) of the axle differential (3).

5. Drive device according to claim 4, **characterised in that** the planetary gear carrier (49) of the intermediate planetary transmission (PG2) and the planetary gear carrier (57) of the output planetary transmission (PG3) are operatively connected to each other via a connecting shaft (69).

6. Drive device according to any of the preceding claims, **characterised in that** the axle differential (3) has a Ravigneaux gear set, in which planetary gears (11) of a first planetary gear set mesh with both a radially outer ring gear (13), which forms the input side of the axle differential (3), respectively with planetary gears (15) of a second planetary gear set as well as with a first, large sun gear (17), and that the planetary gears (15) of the second planetary gear set mesh with a second, small sun gear (19), wherein the two planetary gear sets are rotatably mounted on a common planetary gear carrier (21), and that, in particular, the first, large sun gear (17) is non-rotatably arranged on a torque distribution output shaft (23), the second, small sun gear (19) is non-rotatably arranged on one flange shaft (5) and the common planetary gear carrier (21) is non-rotatably arranged on the other flange shaft (7).

7. Drive device according to claims 3 to 6, **characterised in that** the torque distribution shaft (23) non-rotatably bears a torque distribution output flange (24), which can be operatively coupled with or disengaged from the planetary gear carrier (39) of the input planetary transmission (PG1) via a torque distribution shift element (STV).

8. Drive device according to claim 7, **characterised in that,** when the torque distribution gear stage (TV) is engaged, the torque distribution shaft (23) and the planetary gear carrier (39) of the input planetary transmission (PG1) are operatively connected via the torque distribution shift element (STV), such that a load path is formed from the additional drive machine (26) into the input planetary transmission (PG1), at the planetary gear carrier (39) of which a load distribution takes place, in which a first partial path leads via the ring gear (41) of the input planetary transmission (PG1) and via the ring gear shaft (45) to the intermediate planetary transmission (PG2), and from there further via its planetary gear carrier (49) to the transmission output shaft (63), wherein the output planetary transmission (PG3) rotates freely and is not incorporated in the load path, and a second partial path leads via the planetary gear carrier (39) of the input planetary transmission (PG1) and the closed torque distribution shift element (STV) to the torque distribution shaft (23).

9. Drive device according to claims 3 to 8, **characterised in that** the output planetary transmission (PG3) has a sun gear (65) meshing with its planetary gears (55), which can be coupled with or disengaged from the planetary gear carrier (39) of the input planetary transmission (PG1) via a hybrid shift element (SH1), and that, in particular, when the first hybrid gear stage (H1) is engaged, the planetary gear carrier (39) of the input planetary transmission (PG1) is operatively coupled, via the hybrid shift element (SH1), with the sun gear (65) of the output planetary transmission (PG3), such that a load path is formed from the additional drive machine (26) into the input planetary transmission (PG1), at the planetary gear carrier (39) of which a power distribution takes place, in which a first partial path leads via the planetary gears (37) and the ring gear (41) of the input planetary transmission (PG1) onto the ring gear shaft (45) and further into the intermediate planetary transmission (PG2), from where the first partial path leads via the connecting shaft (69) to the planetary gear carrier (57) of the output planetary transmission (PG3) as far as the transmission output shaft (63), and a second partial path leads from the planetary gear carrier (39) of the input planetary transmission (PG1) via the closed hybrid shift element (SH1) to the sun gear (65) of the output planetary transmission (PG3), and a power addition takes place at the planetary gear carrier (57) of the output planetary transmission (PG3), in which the first and second partial path are added together.

10. Drive device according to claims 3 to 9, **characterised in that** the planetary gear carrier (39) of the input planetary transmission (PG1) is attached to a shift shaft (53), which radially internally limits an installation space, in which the input and intermediate planetary transmission (PG1, PG2) is arranged, and that, in particular, the first hybrid shift element (SH1), the second hybrid shift element (SH2) and the torque distribution shift element (STV) are positioned at a shaft end of the shift shaft (53) spaced apart axially from the input planetary gear carrier (39).

11. Drive device according to claim 10, **characterised in that** the sun gear (65) of the output planetary transmission (PG3) is arranged on a sun gear shaft (67), and that a shaft end of the sun gear shaft (67) remote from the sun gear (65) can be coupled, via the first hybrid shift element (SH1), with the shift shaft (53).

12. Device drive according to any of claims 10 or 11, **characterised in that** the output planetary transmission (PG3) is arranged in the vehicle transverse direction (y) in the vehicle's interior immediately adjacent to the axle differential (3), and the intermediate planetary transmission (PG) is arranged on the vehicle's exterior and that the shift elements (SH1, SH2, STV) are arranged on the vehicle's exterior side of the intermediate planetary transmission (PG2).

## Revendications

1. Dispositif d'entraînement moteur comprenant un essieu de véhicule, en particulier un essieu arrière (HA), d'un véhicule à deux alignements de roues, dans lequel l'essieu de véhicule (HA) présente un différentiel d'axe (3) qui peut être relié côté entrée à un moteur d'entraînement primaire et être relié côté sortie à des roues de véhicule (9) de l'essieu de véhicule (HA) par l'intermédiaire de demi-arbres (5, 7) agencés des deux côtés, dans lequel l'essieu de véhicule (HA) est associé à un moteur d'entraînement supplémentaire (26) et à un engrenage de superposition (25) commutable, pouvant être commuté dans un rapport de répartition de couple (TV) au sein duquel un couple d'entraînement, en fonction de l'ampleur et du sens de rotation duquel une répartition de couple sur les deux roues de véhicule (9) peut être modifiée, est généré par le moteur d'entrainement supplémentaire (26), et pouvant être commuté dans un mode hybride au sein duquel le couple d'entraînement généré par le moteur d'entrainement supplémentaire (26) peut être injecté de manière uniformément répartie sur les deux demi-arbres (5, 7) des roues de véhicule (9) par l'intermédiaire du différentiel d'axe (3), dans lequel l'engrenage de superposition (25) présente exactement trois engrenages planétaires (PG1, PG2, PG3) couplés les uns avec les autres, **caractérisé en ce que,** lorsqu'un premier rapport hybride (H1), en particulier un rapport de démarrage, est commuté, un cheminement des charges est formé au sein duquel s'opère une dérivation de puissance et les trois engrenages planétaires (PG1, PG2, PG3) sont incorporés, et **en ce que**, à la fois lorsqu'un second rapport hybride (H2) est commuté et lorsqu'un rapport de répartition de couple (TV) est commuté, un cheminement des charges est formé au sein duquel les deux mêmes engrenages planétaires (PG1, PG2) sont incorporés.

2. Dispositif d'entraînement moteur selon la revendication 1, **caractérisé en ce que** les trois engrenages planétaires (PG1, PG2, PG3) présentent un engrenage planétaire d'entrée (PG1) relié en entraînement au moteur d'entraînement supplémentaire (26), un engrenage planétaire de sortie (PG3) relié en entraînement au différentiel d'axe (3) et un engrenage planétaire intermédiaire (PG2) placé entre ceux-ci, et **en ce que** en particulier les trois engrenages planétaires (PG1, PG2, PG3) sont agencés en rang les uns derrière les autres de manière coaxiale par rapport à des demi-arbres (5, 7), et **en ce que** l'engrenage planétaire d'entrée (PG1) avec son élément d'entrée, c'est-à-dire la roue solaire (31), est relié de manière solidaire en rotation à un arbre d'entrée de transmission (33) entraîné par le moteur d'entraînement supplémentaire (26), et/ou **en ce que** l'engrenage planétaire de sortie (PG3) avec son élément de sortie, c'est-à-dire un porte-satellites (57) supportant des pignons satellites (55), est agencé de manière solidaire en rotation par l'intermédiaire d'un plateau de sortie hybride (61) sur un arbre de sortie de transmission (63) qui est relié en entraînement au côté entrée (13) du différentiel d'axe (3), et/ou **en ce que** l'engrenage planétaire de sortie (PG3) présente une couronne planétaire (73) solidaire du carter et engrenant avec les pignons satellites (55).

3. Dispositif d'entraînement moteur selon la revendication 2, **caractérisé en ce que** la roue solaire (31) de l'engrenage planétaire (PG1) situé du côté entrée engrène avec des pignons satellites (37) qui sont montés rotatifs au niveau d'un porte-satellites (39) et sont en prise de denture avec une couronne planétaire (41), et **en ce que** la couronne planétaire (41) de l'engrenage planétaire d'entrée (PG1) et une couronne planétaire (43) de l'engrenage planétaire intermédiaire (PG2) sont agencées de manière solidaire en rotation sur un arbre de couronne planétaire (45), et **en ce que** la couronne planétaire (43) de l'engrenage planétaire intermédiaire (PG2) engrène avec des pignons satellites (47) qui sont montés rotatifs au niveau d'un porte-satellites (49) et sont en prise de denture avec une roue solaire (51) solidaire du carter.

4. Dispositif d'entraînement moteur selon la revendication 3, **caractérisé en ce que** le porte-satellites (39) de l'engrenage planétaire d'entrée (PG1) peut être freiné jusqu'à l'arrêt au niveau du carter d'engrenage, ou être débrayé par rapport à celui-ci, par l'intermédiaire d'un élément de commutation hybride (SH2), et **en ce que** le porte-satellites (49) de l'engrenage planétaire intermédiaire (PG2) est rattaché de manière solidaire en rotation au porte-satellites (57) de l'engrenage planétaire de sortie (PG3) ou à l'arbre de sortie de transmission (63), de sorte que, dans le second rapport hybride (H2), le porte-satellites (39) de l'engrenage planétaire d'entrée (PG1) est commuté de manière solidaire du carter par l'intermédiaire de l'élément de commutation hybride (SH2), de sorte qu'un cheminement des charges en résulte, qui va du moteur d'entrainement supplémentaire (26) jusqu'à l'engrenage planétaire intermédiaire (PG2) en passant par l'engrenage planétaire d'entrée (PG1) et ensuite jusqu'au côté entrée (13) du différentiel d'axe (3) en passant par l'arbre de sortie de transmission (63).

5. Dispositif d'entraînement moteur selon la revendication 4, **caractérisé en ce que** le porte-satellites (49) de l'engrenage planétaire intermédiaire (PG2) et le porte-satellites (57) de l'engrenage planétaire de sortie (PG3) sont reliés en entraînement l'un à l'autre par l'intermédiaire d'un arbre de liaison (69).

6. Dispositif d'entraînement moteur selon l'une quelconque des revendications précédentes, **caractérisé en ce que** le différentiel d'axe (3) présente un train planétaire de Ravigneaux, dans lequel des pignons satellites (11) d'un premier train planétaire engrènent à la fois avec une couronne planétaire (13) radialement extérieure qui forme le côté entrée du différentiel d'axe (3), respectivement avec des pignons satellites (15) d'un second train planétaire, et avec une première roue solaire de grande taille (17), et **en ce que** les pignons satellites (15) du second train planétaire engrènent avec une seconde roue solaire de petite taille (19), dans lequel les deux trains planétaires sont montés rotatifs au niveau d'un porte-satellites commun (21), et **en ce que** en particulier la première roue solaire de grande taille (17) est agencée de manière solidaire en rotation sur l'arbre de sortie de répartition de couple (23), la seconde roue solaire de petite taille (19) est agencée de manière solidaire en rotation sur l'un (5) des demi-arbres et le porte-satellites commun (21) est agencé de manière solidaire en rotation sur l'autre (7) des demi-arbres.

7. Dispositif d'entraînement moteur selon les revendications 3 à 6, **caractérisé en ce que** l'arbre de répartition de couple (23) supporte de manière solidaire en rotation un plateau de sortie de répartition de couple (24) qui, par l'intermédiaire d'un élément de commutation de répartition de couple (STV), peut être couplé en entraînement avec le porte-satellites (39) de l'engrenage planétaire d'entrée (PG1) ou être débrayé par rapport à celui-ci.

8. Dispositif d'entraînement moteur selon la revendication 7, **caractérisé en ce que,** lorsque le rapport de répartition de couple (TV) est enclenché, l'arbre de répartition de couple (23) et le porte-satellites (39) de l'engrenage planétaire d'entrée (PG1) sont reliés en entraînement par l'intermédiaire de l'élément de commutation de répartition de couple (STV), de sorte qu'un cheminement des charges est formé, qui va du moteur d'entrainement supplémentaire (26) jusqu'à l'engrenage planétaire d'entrée (PG1) au niveau du porte-satellites (39) duquel s'opère une répartition de puissance pour laquelle un premier trajet partiel mène jusqu'à l'engrenage planétaire intermédiaire (PG2) en passant par la couronne planétaire (41) de l'engrenage planétaire d'entrée (PG1) et par l'arbre de couronne planétaire (45), et à partir de là continue jusqu'à l'arbre de sortie de transmission (63) en passant par le porte-satellites (49) dudit engrenage planétaire intermédiaire, dans lequel l'engrenage planétaire de sortie (PG3) tourne librement et n'est pas incorporé dans le cheminement des charges, et un second trajet partiel mène jusqu'à l'arbre de répartition de couple (23) en passant par le porte-satellites (39) de l'engrenage planétaire d'entrée (PG1) et par l'élément de commutation de répartition de couple (STV) fermé.

9. Dispositif d'entraînement moteur selon les revendications 3 à 8, **caractérisé en ce que** l'engrenage planétaire de sortie (PG3) présente une roue solaire (65) engrenant avec des pignons satellites (55) dudit engrenage planétaire de sortie et pouvant être couplée avec le porte-satellites (39) de l'engrenage planétaire d'entrée (PG1), ou être débrayée par rapport à celui-ci, par l'intermédiaire d'un élément de commutation hybride (SH1), et **en ce que**, en particulier lorsque le premier rapport hybride (H1) est enclenché, le porte-satellites (39) de l'engrenage planétaire d'entrée (PG1) est couplé en entraînement avec la roue solaire (65) de l'engrenage planétaire de sortie (PG3) par l'intermédiaire de l'élément de commutation hybride (SH1), de sorte qu'un cheminement des charges est formé, qui va du moteur d'entraînement supplémentaire (26) jusqu'à l'engrenage planétaire d'entrée (PG1) au niveau du porte-satellites (39) duquel s'opère une répartition de puissance pour laquelle un premier trajet partiel mène à l'arbre de couronne planétaire (45) en passant par les pignons satellites (37) et par la couronne planétaire (41) de l'engrenage planétaire d'entrée (PG1) et continue jusqu'à l'engrenage planétaire intermédiaire (PG2), à partir duquel le premier trajet partiel mène au porte-satellites (57) de l'engrenage planétaire de sortie (PG3) jusqu'à l'arbre de sortie de transmission (63) en passant par l'arbre de liaison (69), et un second trajet partiel mène du porte-satellites (39) de l'engrenage planétaire d'entrée (PG1) à la roue solaire (65) de l'engrenage planétaire de sortie (PG3) en passant par l'élément de commutation hybride (SH1) fermé, et une addition de puissance, pour laquelle les premier et second trajets partiels sont additionnés, a lieu au niveau du porte-satellites (57) de l'engrenage planétaire de sortie (PG3).

10. Dispositif d'entraînement moteur selon les revendications 3 à 9, **caractérisé en ce que** le porte-satellites (39) de l'engrenage planétaire d'entrée (PG1) est rattaché à un arbre de commande (53) qui délimite radialement vers l'intérieur un espace de montage au sein duquel sont agencés les engrenages planétaires d'entrée et intermédiaire (PG1, PG2), et **en ce que** le premier élément de commutation hybride (SH1), le second élément de commutation hybride (SH2) et l'élément de commutation de répartition de couple (STV) sont positionnés en particulier au niveau d'une extrémité d'arbre, axialement espacée par rapport au porte-satellites d'entrée (39), du second élément de commutation hybride (SH2).

11. Dispositif d'entraînement moteur selon la revendication 10, **caractérisé en ce que** la roue solaire (65) de l'engrenage planétaire de sortie (PG3) est agencé sur un arbre de roue solaire (67) et **en ce qu'**une extrémité d'arbre, éloignée de la roue solaire (65), de l'arbre de roue solaire (67) peut être couplée avec l'arbre de commande (53) par l'intermédiaire du premier élément de commutation hybride (SH1).

12. Dispositif d'entraînement moteur selon l'une quelconque des revendications 10 ou 11, **caractérisé en ce que** l'engrenage planétaire de sortie (PG3) est agencé à l'intérieur du véhicule dans la direction transversale du véhicule (y) à proximité immédiate du différentiel d'axe (3), et l'engrenage planétaire intermédiaire (PG) est agencé à l'extérieur du véhicule et **en ce que** les éléments de commutation (SH1, SH2, STV) sont agencés du côté de l'engrenage planétaire intermédiaire (PG2) qui se situe vers l'extérieur du véhicule.
